# EUROPEAN PATENT APPLICATION

(11) **EP 1 296 239 A2**
(43) Date of publication of application: **26.03.2003**
(21) Application number: 02019789.3
(22) Date of filing: 04.09.2002
(51) Int. Cl.: G06F 9/46, H04L 29/08

(54) **Interprocess communication method and apparatus**

(30) Priority: 04.09.2001 US 316301 P; 30.04.2002 EP 02009766
(71) Applicant: SAMSUNG ELECTRONICS CO., LTD., Suwon-City, Kyungki-do (KR)
(72) Inventor: Yun, Yeong-Hyun, Suwon-city, Kyungki-do (KR)
(74) Representative: Grünecker, Kinkeldey, Stockmair & Schwanhäusser Anwaltssozietät

(57) **Abstract**

An interprocess communication method for transporting messages from an originating place to a terminating place, the method including the steps of: providing an operating system-unified interface function, at an operating system independent access (OIA) layer, which is independently accessible to operating systems of a communication apparatus; providing a device-unified interface function, at a device independent access (DIA) layer, which is independently accessible to physical devices of the communication apparatus; and transporting messages, at a unified interprocess communication (UIPC) layer, from the originating place to the terminating place through at least one of the operating system independent access layer and the device independent access layer, using information about the terminating place that is provided by a terminating place task, and using a common task architecture based on the task's basic common control flow.

## Description

The present invention relates generally to a communication system performing InterProcess Communication (hereinafter, it is abbreviated as IPC). In particular, the present invention relates to a Unified InterProcess Communication (hereinafter, it is abbreviated as UIPC) method and apparatus, which are independent of communication physical devices and an operating system.

IPC uses a variety of methods for interprocess message communication, for example, pipe, semaphore, message queue, or shared memory. These methods are all based on operating systems. Therefore, it was possible to provide diverse IPC methods having the basis on the operating systems. In other words, IPC methods were dependent on the operating systems. In consequence, every time IPC and process are to be implemented, an application software had to be changed according to the operating system used in a communication system. Also, in case of IPC between hardware devices, different physical devices driver were used for different physical devices provided. Thus, for a process using the devices driver, IPC function should be changed in accordance with a kind of devices driver in use.

Such IPC methods in a communication system were dependent on operating systems and physical devices. As a result, as the operating system and physical devices used in the communication system are changed, overhead occurs repeatedly. This not only deteriorated reusability and portability of the software, but also burden related industries with time and cost to develop a new communication system.

It is, therefore, the object of the present invention to provide flexible and unified interprocess communication method and apparatus, which are independent of operating systems and physical devices of a communication system.

According to an aspect of the present invention, there is provided a unified interprocess communication method and apparatus, capable of performing interprocess communication with high reusability ad portability, regardless of operating systems used in a communication system.

According to another aspect of the present invention, there is provided a unified interprocess communication method and apparatus, which are independent of physical devices used in a communication system.

According to still another aspect of the present invention, there is provided a communication apparatus for transporting messages from an originating place to a terminating place, regardless of the kind of communication methods (e.g., ATM, IP, SDH and so on) used in the communication apparatus.

To achieve the above object, there is provided a communication method for transporting messages from an originating place to a terminating place, including the steps of: providing an operating system-unified interface function, at an operating system independent access (OIA) layer, which is independently accessible to operating systems of a communication apparatus; providing a device-unified interface function, at a device independent access (DIA) layer, which is independently accessible to physical devices of the communication apparatus; and transporting messages, at a unified interprocess communication (UIPC) layer, from the originating place to the terminating place through at least one of the operating system independent access layer and the device independent access layer, using information about the terminating place that is provided by a terminating place task, and using a common task architecture based on the task's basic common control flow.

Another aspect of the present invention provides a communication apparatus for transporting messages from an originating place to a terminating place, the apparatus including: operating system independent access (OIA) layer for providing an operating system-unified interface function, which is independently accessible to operating systems of a communication apparatus; device independent access (DIA) layer for providing a device-unified interface function, which is independently accessible to physical devices of the communication apparatus; and unified interprocess communication (UIPC) layer for transporting messages from the originating place to the terminating place through at least one of the operating system independent access layer and the device independent access layer, using information about the terminating place that is provided by a terminating place task, and using a common task architecture based on the task's basic common control flow.

One thing to notice in the embodiment of the present invention is that terms like "process", "application", or "task" are used interchangeably, and all of them mean the task existing on a upper portion of the UIPC layer.

The above object, features and advantages of the present invention will become more apparent from the following detailed description when taken in conjunction with the accompanying drawings in which:
FIG. 1 is a schematic diagram of a network for exchanging messages between each shelf in accordance with a preferred embodiment of the present invention;
FIG. 2 is an exemplary diagram of detailed configuration of a communication system to which UIPC (Unified InterProcess Communication) is applied in accordance with the preferred embodiment of the present invention;
FIG 3 is a block diagram of a common software platform which includes the UIPC as a component in accordance with the preferred embodiment of the present invention;
FIG 4 is a diagram representing UIPC configuration per card (per unit) in accordance with the preferred embodiment of the present invention;
FIG. 5 is a flow chart of a process using the structure of a common task architecture, that is, a basic control flow chart of a task; and
FIG. 6 is a diagram explaining UIPC API configuration and common task architecture in accordance with the preferred embodiment of the present invention.

A preferred embodiment of the present invention will be described herein below with reference to the accompanying drawings. In the following description, well-known functions or constructions are not described in detail since they would obscure the invention in unnecessary detail.

The following foreign literature discloses background and additional information that are helpful for understanding the principles of the present invention.
- Open Systems Interconnection, Basic Reference Model, ITU-T X. 200
- Open Systems Interconnection, Data Link Service Definition, ITU-T X. 212;
- Open Systems Interconnection, Network Service Definition, ITU-T X. 213; and
- Open Systems Interconnection, Transport Service Definition, ITU-T X. 214.

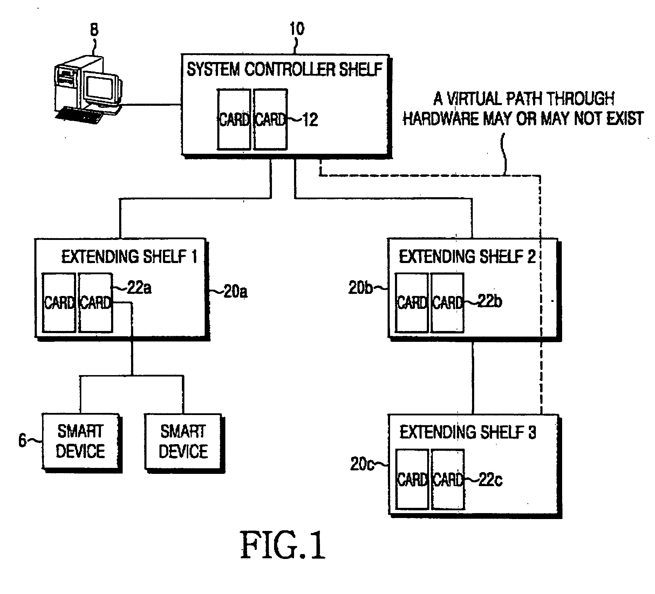

FIG. 1 is a schematic diagram of a network for exchanging messages between each shelf, embodying the principles of the present invention. Network topology depicted in the drawing includes an Element Management System (EMS) 8, a system controller shelf 10 equipped with a plurality of cards including a card 12, a first extending shelf 201 equipped with smart devices 6 and a plurality of cards including a card 22a, a second extending shelf 20b equipped with a plurality of cards including a card 22b, and a third extending shelf 30c equipped with a plurality of cards including a card 22c.

Referring to FIG 1, for the third extending shelf 20c to be able to communicate with the system controller shelf 10, although the communication between the third extending shelf 20c and the system controller shelf 10 could pass through the second extending shelf 20b physically, a virtual direct path exists between the third extending shelf 20c and the system controller shelf 10, according to the principles of the present invention.

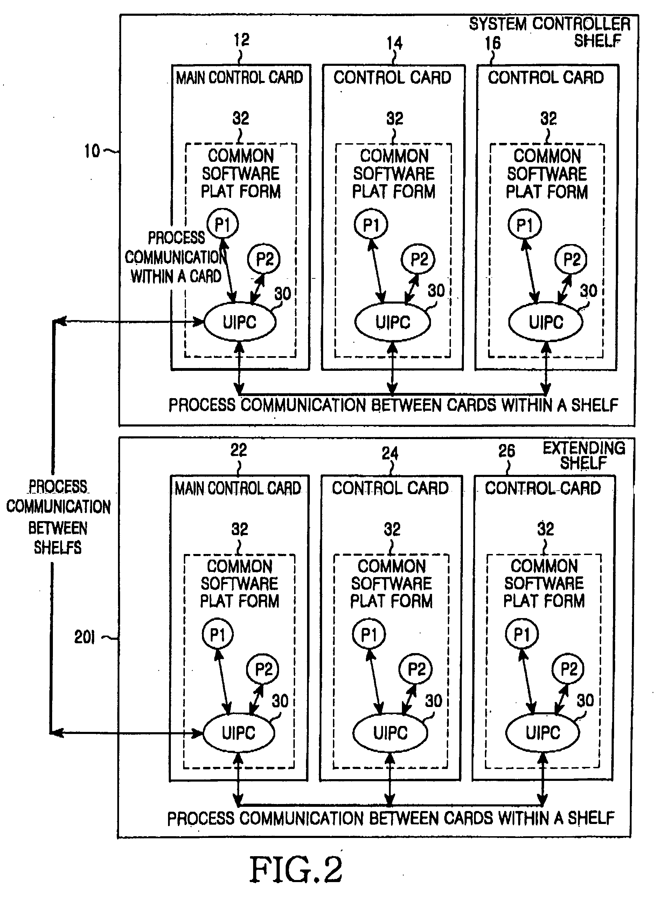

FIG 1 is prepared primarily for explaining the network configuration to which the UIPC function of the present invention is applied. Roughly describing UIPC of the present invention, even though it would be detailed later with reference to FIG. 2, it supports message exchange between tasks in each card, between tasks on different cards in the same shelf, and between tasks in a certain shelf and attached smart devices 6 (for example, digital subscriber line modem and unified access devices). It should be noted that the above described function is based on an assumption that if necessary, the system controller shelf 10 decides paths for messages to be transported between two shelfs. This simplifies the overall protocol, and reduces overhead that is related to protocols like Internet Protocol (IP) dealing with a more generalized network topology. Also, messages can be sent to a path between the Element Management System (EMS) 8 and a certain card of in a shelf. As far as the UIPC is concerned, an EMS 8 acts like another shelf.

FIG. 2 illustrates a detailed configuration of a communication system to which the UIPC function of the present invention is applied.

Extending shelf 20i drawn FIG. 2 is one of the plurality of extending shelfs depicted in FIG. 1, and system controller shelf 10 is a shelf for controlling the plural extending shelfs 20a, 20b, and 20c. Each shelf 10, 20i includes a plurality of control cards 14, 16, 24, and 26, and a main control card 12, 22 for controlling the plural control cards 14, 16, 24, and 26. Every control card 14, 16, 24, and 26, and the main control card 12, 22 are provided with UIPC 30 as part of components of common software platform 32 for interprocess message communication. UIPC 30 is a means for providing a path for message communication between processes in the cards, between the cards, in the shelfs, and between the shelfs. Each UIPC 30 is connected to processes (application tasks) like P1, P2 shown in FIG. 2.

UIPC 30, as shown in FIG. 2, is provided as three kinds of formats, "process communication within cards (intraprocessor communication)", "process communication between cards within a shelf (interprocessor communication)", and "process communication between shelfs (interprocessor communication)". Particularly, "process communication between cards within a shelf (interprocessor communication)", and "process communication between shelfs (interprocessor communication)" require a separate physical device driver.

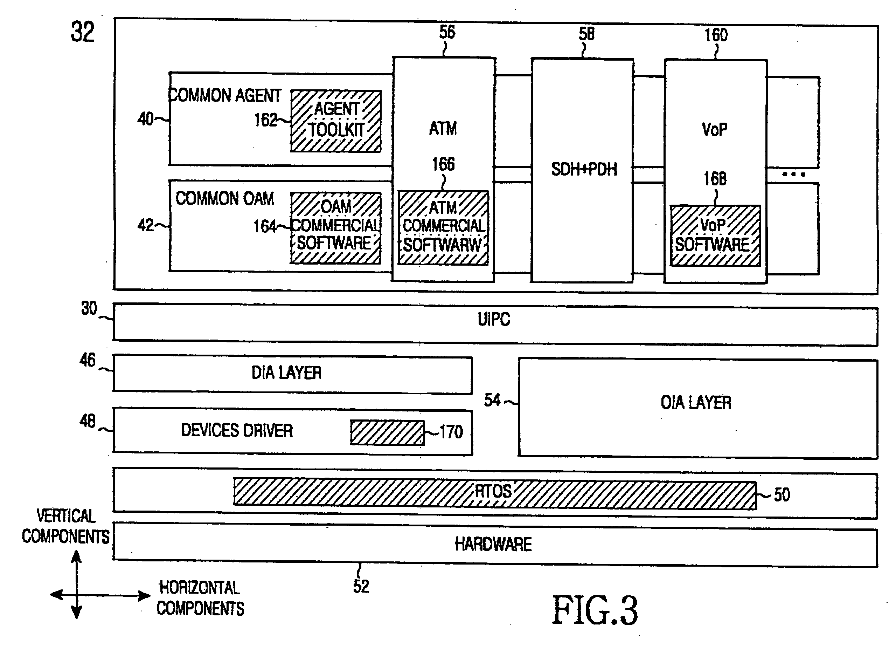

FIG. 3 is a block diagram of a common software platform 32 partially including the UIPC 30 embodying the principles of the present invention as a component.

Common software platform 32 depicted in FIG. 3 is a software for providing general and common functions that are applicable to a number of different communication systems. The common software platform 32 exists in each card 12, 14, 16, 22, 24, and 26 within the cell 10, 20 illustrated in FIG 2, and its components are divided into a plurality of functional units.

As FIG. 3 shows, the common software platform 32 is largely divided into the components that are horizontally arrayed (hereinafter, they are referred to "horizontal components"), and the components that are vertically arrayed (hereinafter, they are referred to "vertical components"). More specifically, the horizontal components, such as, common agent 40, common OAM (Operation Administration and Maintenance) 42, UIPC (Unified InterProcess Communication) 30, DIA (Device Independent Access) layer 46, physical device drivers 48, RTOS (Real Time Operating System) 50, and hardware 52, are common functional blocks required by all kinds of communication systems, and their particular technical functions are provided by the vertical components. On the other hand, the vertical components, such as, ATM (Asynchronous Transfer Mode) 56, SDH (Synchronous Digital Hierarchy) + PDH (Plesiochronous Digital Hierarchy) 58, and VoP (Voice over Packet) 160, are technical functional blocks that are required, depending on the kind of communication system. Similar to before, the technical functions of the vertical components are provided by the horizontal components, and they are variable in accordance with the kind of communication system. For example, the common OAM 42 among other horizontal components particularly gives the alarm, collects performance data, and manages the performance data for administration and maintenance of the communication system. Therefore, if the common OAM 42 does something in connection with ATM, like giving an ATM related alarm or collecting performance data for an ATM related communication system, one of vertical components, ATAM 56 to be precise, provides the data. In FIG. 2, the functional blocks 50, 162, 164, 166, 168, and 170 with slashed lines could be utilized in case a commercial software is used or added.

The upper blocks, that is, from "common agent 40" to "common OAM 42" shown in FIG. 3 are dependent on the application of a software.

Normally, various communication systems include a common software platform 32 like the one illustrated in FIG 3, and all applications a communication system tries to implement in the future would be developed in the form of a combined function of the vertical components and the horizontal components that are provided by the common software platform 32.

The following explains specific functions of the horizontal components of the common software platform 32 drawn in FIG. 3

### 1. Operating System Independent Access Layer (OIA layer) 54

- It provides an OS unified interface function for the implementation of application and UIPC 30, making an independent OS access possible without relying upon any operating system (OS) like RTOS 50. As a result, portability of the application and UIPC 30 is enhanced. In other words, the software application and UIPC 30 can be reused for different operating systems in different communication systems.

### 2. Device Independent Access Layer (DIA layer) 46

- By hiding more concrete part of the physical device driver 48, it provides a common model for a variety of devices, that is, a device unified interface function, which enables an independent access to diverse devices without relaying upon the devices. Thanks to the DIA layer 46, it is now possible to reuse the application and UIPC 30/ OIA layer 54 even when hardware chips like the hardware 52 illustrated in FIG. 3 are changed.

### 3. Unified Interprocess Communication (UIPC) 30

- By hiding detailed information about IPC mechanism in conforming to the operating system for interprocess communication, and underlying software like RTOS 50, and underlying hardware 52, no separate task is needed especially when the operating system is changed for implementing an application.

### 4. Common Operation, Administration & Maintenance (Common OAM) 42

- It provides a common method for operation, administration and maintenance of various kinds of communication systems.

### 5. Common Agent Software 40

- It provides an interface for an external network operating system for a more effective network operation in a communication system.

In short, the common software platform 32, by providing common functions without pursuing a particular function, exists primarily for the implementation of a software architecture that is reusable to various kinds of communication systems, and is independent of operating systems and hardware devices. And, UIPC 30 is one of components of the common software platform 32 for implementing an interprocess message communication method.

So far, the common software platform 32 has been described for a better understanding about the present invention. From now on, the UIPC 30 configuration and its functions will be explained in detail.

UIPC 30, similar to the one in FIG. 2, works in every control unit, that is, the control cards 12, 14, 16, 22, 24, and 26. Mainly, it provides a message communication function between processes within a card, within a shelf, or in different shelfs.

Required for message communications through the UIPC 30 of the present invention are application ID (application identifier) APP_ID, and a network address N_ADDR. Application ID APP_ID is an ID for distinguishing a relevant process to communicate, and network address N_ADDR is an address value representing a physical address of the relevant process. The network address N_ADDR has a size of 4 octets, and comprises rack-shelf-slot-port information. Therefore, the physical address of a corresponding process is easily obtained by using the network address N_ADDR. Network address N_ADDR uses a shelf and slot (where a card is mounted) ID only for the UIPC 30, and the rack and port ID are used for different purposes. Again referring to FIG 2, let's take an example in which a message is transmitted from process 1 (P1)in the main control care 12 of the system controller shelf 10 to process 1 (P1) in the main control card 22 of the extending shelf 20i. Suppose that the ID of the system controller shelf 10 is "1", the ID of the extending shelf 20 is "2", and the slot ID of the main control card 12, 22 is "22". First of all, the originating place and the terminating place application ID APP_ID is P1, respectively. Then, the originating network address N_ADDR is hexadecimal, "0x00010200" (rack-shelf-slot-port), and the terminating network address N_ADDR is also hexadecimal, "0x00020200" (rack-shelf-slot-port). When the network address N_ADDR, and the application ID APP_ID are compared to the internet protocol (IP), it is found that the network address N_ADDR similarly corresponds to an IP address, and the application ID APP_ID to a port number of TCT (Transmission Control Protocol).

The following are the functions of the UIPC 30 embodying the principles of the present invention.
- UIPC 30 transports a bi-directional message to tasks anywhere in network components.
- UIPC 30 permits an application to transmit messages asynchronously. API (Application Program Interface) gives an immediate response without blocking.
- UIPC 30 allows tasks to transport messages, and to respond synchronously, taking a time-out.
- UIPC 30 extracts a underlying physical transport mechanism.
- UIPC 30 provides a mechanism for broadcasting messages.
- UIPC 30 makes lower level UIPC protocols changeable without changing upper layer protocols, and vice versa.
- UIPC 30 detects transmission errors on the link-to-link basis, and performs a retrial on the errored packets. This means that a data link layer of the protocol for handling each link should be able to make reliable links.
- Common UIPC API is used for intraprocessor communication and external process communication.
- Common UIPC 30 partitions and reassembles high capacity messages.
- UIPC 30 provides a mechanism enabling a debug output.
- UIPC protocol parameters are settable during the run-time as well.
- UIPC 30 provides a mechanism for designating a maximum transport unit for each link.
- UIPC 30 accommodates links having variable maximum transport units.
- UIPC 30 supports a message priority concerning real-time critical messages.
- UIPC 30 is independent of operating systems (0S).
- UIPC 30 makes messages from the controller pass through transparently, and eventually arrive at the devices that are attached to the cards.

Although UIPC 30 transports messages from an originating place to a destination, it acts as an application as long as the contents of the messages are concerned. Thus no presentation mechanism is provided for a particular system message. The presentation mechanism of system messages is like a presentation layer, but the UIPC 30 according to the present invention does not include the presentation layer because the UIPC 30 aims for real-time protocol.

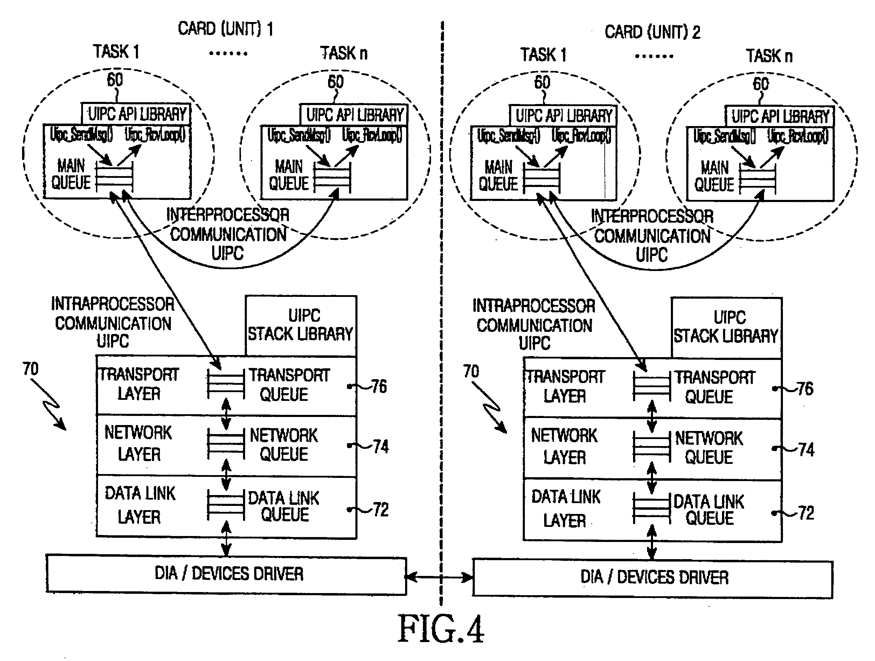

FIG. 4 is a diagram representing UIPC configuration per card (per unit) embodying the principles of the present invention. It should be understood that in the drawing, "task" is used interchangeably with "process".

Referring to FIG. 4, UIPC 30 included in each card (unit) is largely divided into UIPC API (Application Program Interface) 60, and UIPC protocol stack 70. It is so to more effectively distinguish the interprocessor communication requiring the UIPC protocol stack 70 from the intraprocessor communication not requiring the UIPC protocol stack 70. Specifically speaking, the interprocessor communication is a case, wherein its network address N_ADDR is not itself, so messages should be transported from its card to another card, while the intraprocessor communication is a case, wherein its network address N_ADDR is itself, so messages are directly transported to a corresponding task at the inside of the card. Meanwhile, UIPC API (Application Program Interface) 60 is provided in the form of a library, being called from a task. In general, a task calls UIPC API 60 for transceiving messages, and communicates with the UIPC protocol stack 70 to handle the messages in the interprocessor communication.

To begin with, UIPC API 60 according to the embodiment of the present invention is further explained in detail with reference to FIG. 4.

### UIPC API (60)

UIPC API 60 is a common library that can be shared with any kind of task (process), and provides an interface associated with every inter performance the UIPC 30 provides. In other words, UIPC API 60 provides an interface for enabling any type of application task to be able to use UIPC function. In addition, UIPC API 60 determines inter and intra process communication paths based on the network address N_ADDR and application ID APP_ID. In the meantime, UIPC API 60 does not use the UIPC protocol stack 70 for intraprocessor communication. Further, UIPC API 60 searches out the network address N_ADDR, trying to find the physical address of a corresponding application task (process), and if the intraprocessor communication is concerned, it transports messages directly to a message queue of a corresponding task (process) through the OIA API that is provided by the OIA layer 54 of FIG. 3. On the other hand, if the interprocessor communication is concerned, UIPC API 60 transport messages to a message queue of the UIPC protocol stack 70 for routing looking for a destination.

One of the most critical functions the UIPC API 60 provides to the task (application) is a common task architecture of the common software platform 32, which enables the task to use the UIPC. Major functions of the common task architecture according to the present invention are listed below.
1. Developers do not need to redesign the task structure any more.
2. Asynchronous callback function is performed on the task of a caller.
3. Developers do not have to work on integration of common components (e.g., common OAM) and applications.
4. Communication between tasks based on the message queue method is now possible because it is a common IPC mechanism that all operating systems provide.

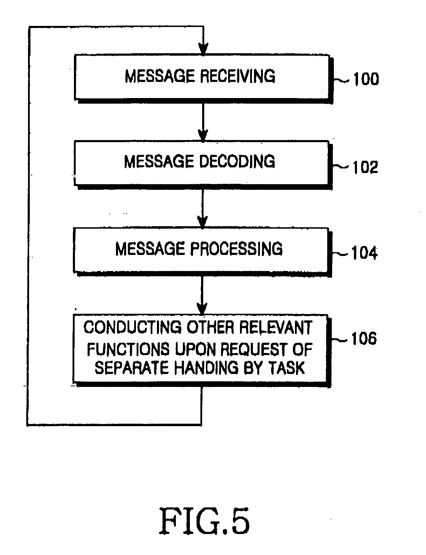

Among the components of the common software platform 32 (horizontal components + vertical components), particularly the software application of a upper block of the UIPC layer 30, for example, common agent task 40, common OAM task 42 and so forth, is successfully implemented by using the common task architecture embodying the principles of the present invention. FIG. 5 is a basic common control flow of a task (process) using the common task architecture structure with those 4 functions described above.

Referring to FIG. 5, the task waits for a message using a queue. The task receives a message asynchronously (S100), decodes and analyzes the received message (S102), and carries out message disposition (S104). If a separate disposition is required, the task processes other specific application (S106), and then waits for a message going back to the step 100.

Table 1 and Table 2 show results of the comparison of a conventional legacy task architecture with the common task architecture of a task having a basic common control flow shown in FIG. 5 according to the present invention. As illustrated in Table 1, since the conventional legacy task is not a common structure, it should be designed individually with different formats in conforming to developers and task performances. Therefore, even if a task was a considerable overhead during the development period, it had to be redesigned. On the contrary, the common task architecture according to the present invention, as shown in Table 2 below, is implemented to have a basic common control flow of the task like the one illustrated in FIG. 5, which is free of overhead. In this manner, the developing time was greatly shortened.

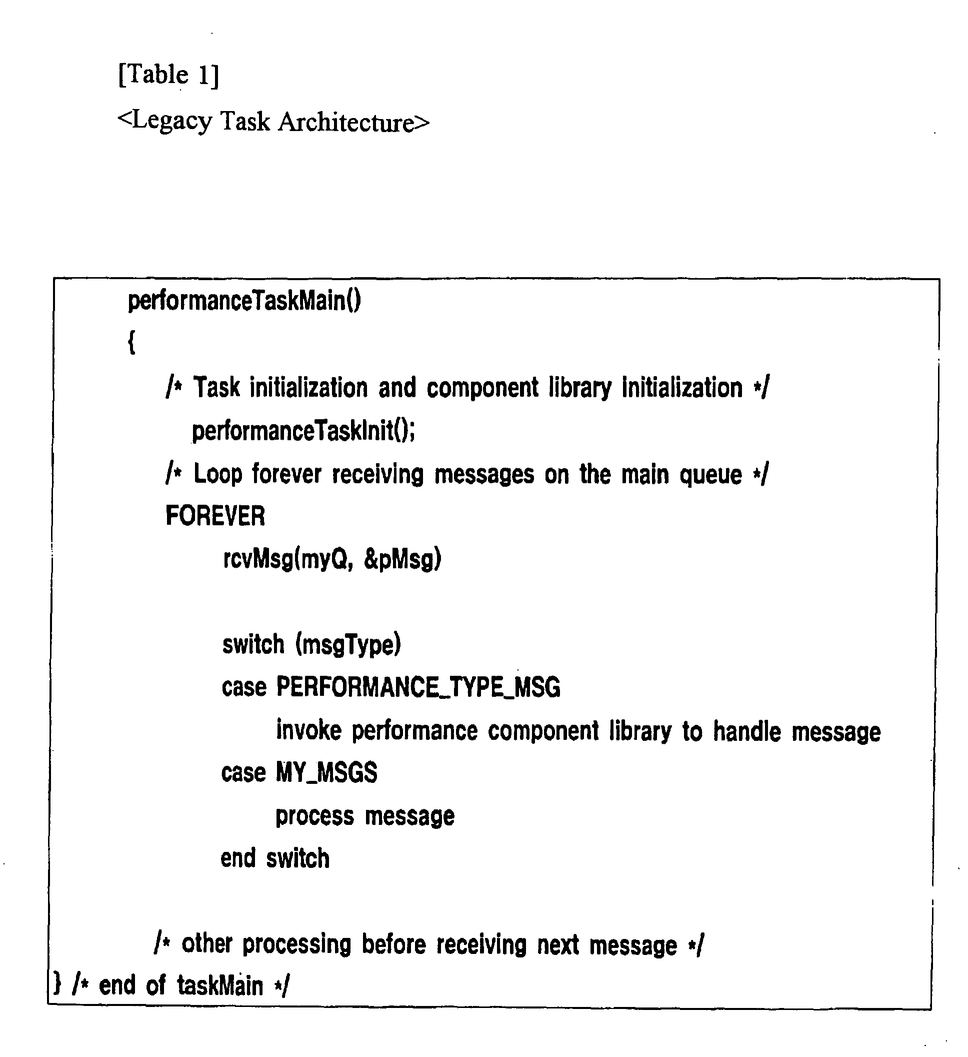

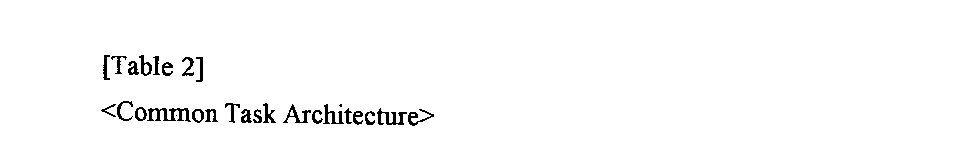

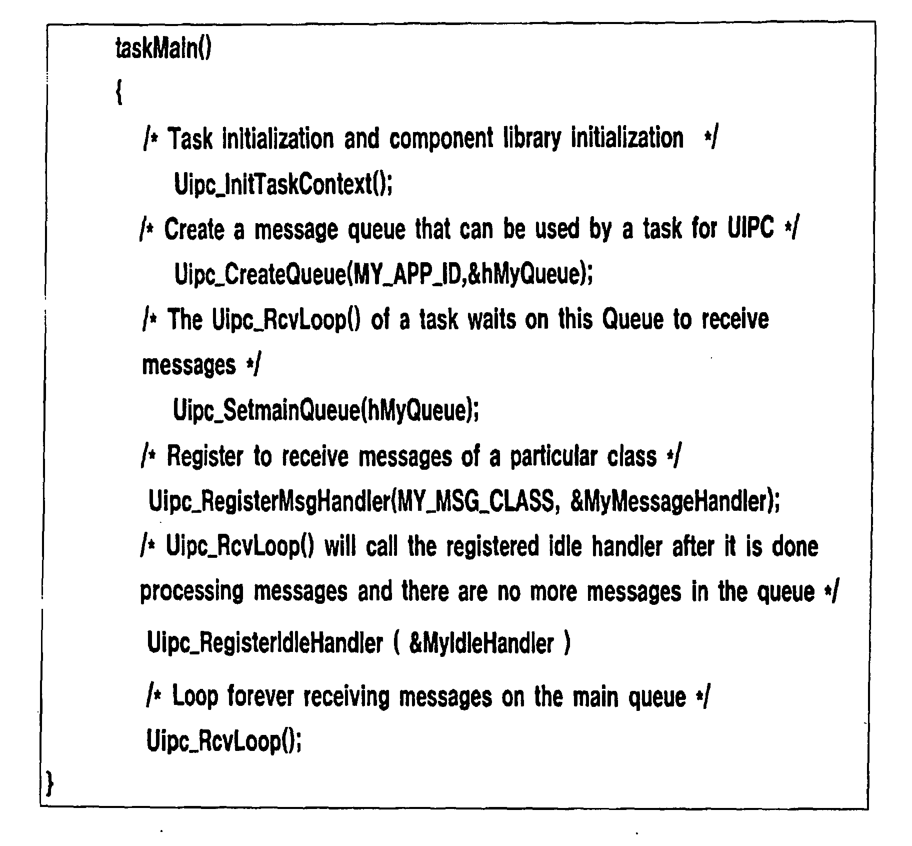

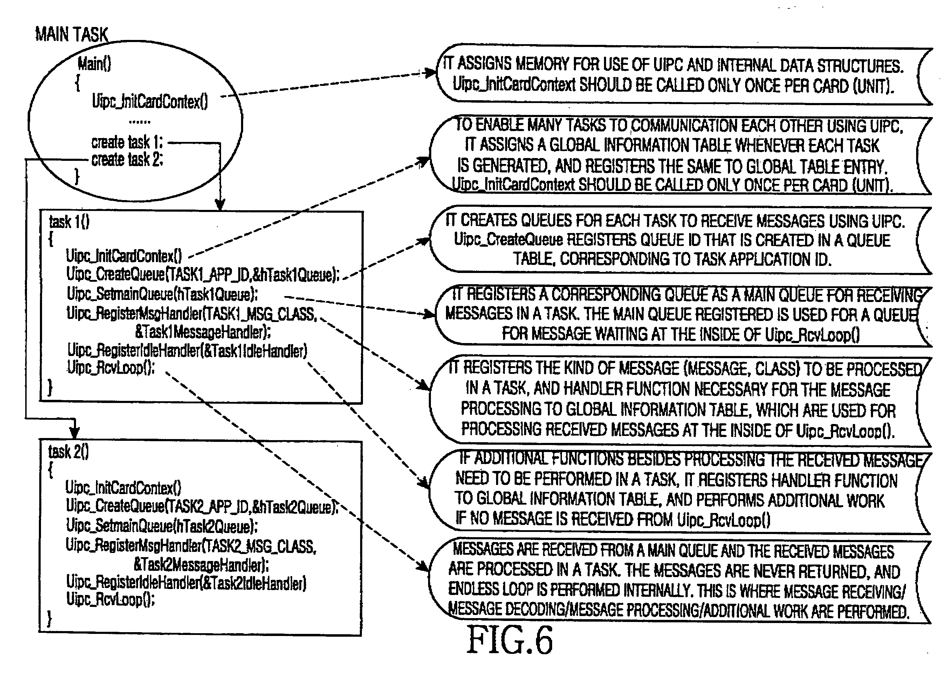

The common task architecture depicted in Table 2 is now detailed with reference to FIG. 6.

FIG. 6 is an explanatory diagram for UIPC API configuration and the common task architecture according to the present invention. Referring to FIG. 6, a main task of each card generates a global information table, similar to the one shown in Table 3, at the inside of the UIPC, and generates serve tasks, task 1 and task 2, carrying out their own specific functions (e.g., alarm task, performance task and so on).

**[Table 3]**

| | | | | | | |
|---|---|---|---|---|---|---|
| Task ID | Application ID | Pointer for task's dynamic message handler table | Pointer for task's static message handler table | Pointer for task's dynamic message class table | Pointer for task's idle message handler | Waiting time used within Uipc_RcvLoop ( ). |

To explain more about the UIPC global information table at the inside of the UIPC, the global information table includes information about all tasks at a particular card. Each entry in the global information table is a task control block (TSB). Each task control block is supposed to possess uniformly designated information.

First field of the task control block is 'task ID'. Second field of the task control block is 'application ID', which is the 'application ID' of the 'main queue' of the task.

Each task has a dynamic message handler table, a static message handler table, and a dynamic message class table. Every time the task invokes Uipc_RegisterOneTimeApi( ), an entry is created in the dynamic message handler table. Such task in the dynamic message handler table is not permanent. In fact, the entry is deleted as soon as a response is received from API. The dynamic message handler table could be implemented by using balanced binary trees. Whenever a task creates Uipc_RegisterMsgHandler( ), an entry is generated at the static message handler table. Here, the static message handler table is exclusively used for API of a supervisor. Unlike the entry in the dynamic message handler table, the entry in the static message handler table is permanent. Thus the static message handler table can be implemented by using arrays.

Whenever a task invokes Uipc_GenerateTempMsgClass( ), the message class returns to the above described task, and any necessary updating takes place in the dynamic message class table, making a particular message class busy. Also, whenever the task invokes Uipc_FreeTempMsgClass( ), the UIPC makes necessary modification on the dynamic message class table to make a particular message class available for a later use. The dynamic message class table is implemented as another array.

The global information table includes pointers for every aforementioned table. Further, the global information table includes a pointer for 'Idle Message Handler' function of the task. The global information table also includes latency time that is supposed to be used within Uipc_RcvLoop( ) only of each task. Within the Uipc_RcvLoop API, the global information table will be questioned on the latency time. Now that every task is accessible to the global information table, a designated semaphore signal protects the global information table. Such semaphore signal is generated during Uipc_InitCardCentext(·).

Referring back to FIG. 6, at the UIPC API, Uipc_InitCardContext( ) is supposed to initiate the UIPC 30 in accordance with the present invention. Uipc_InitCardContext() that is run by the main task assigns a memory for use of UIPC 30 and generates an intra-data structure. Here, Uipc_InitCardContext( ) should be called only once for each card (unit).

Further explanation follows in connection with a common task architecture of dependent tasks, task1 and task 2, that are generated by the main task.

At the common task architecture, Uipc_InitTaskContext( ) assigns a global information table whenever a task is generated to help many tasks to be able to communicate one another using UIPC 30, and registers the global information tables assigned to a global table entry. Again, Uipc_InitTaskContext( ) should be called only once for each task.

Uipc_CreateQueue(TASKl_APP_ID, & Task1Queue) creates a queue to help each task to be able to receive messages using UIPC. Uipc_CreateQueue(TASKl_APP_ID,&TasklQueue) registers a queue ID created to a queue table for application ID of a task.

Uipc_SetmainQueue(hTasklQueue) sets a corresponding queue as a main queue for receiving messages. Once it is registered as the main queue, it is used as a message wait queue at the inside of Uipc_RcvLoop( ).

Uipc_RegisterMsgHandler(TASK1_MSG_CLASS,&Task1MessageHan dler) registers messages (message class) to process the messages received from a task, and handler function for message processing to a global information table. They are used for processing messages received at the inside of Uipc_RcvLoop( ).

Uipc_RegisterIdleHandler(&TasklIdleHandler) registers handler function to a global information table as a task intends to perform additional function besides the message processing, carrying out an additional work given that no message is received from UipcRcvLoop( ).

Uipc_RcvLoop( ) is where a task receives messages from the main queue and processes the received messages. It never returns, but performs a limitless loop internally. Further, it performs things like message receiving/message decoding/message processing/additional work.

UIPC protocol stack 70 of UIPC 30 is now detailed with reference to FIG. 4.

### UIPC Protocol Stack 70

UIPC protocol stack 70 is for the interprocessor communication. Interprocessor communication takes place when UIPC API 60 transmits a message using a queue out of UIPC protocol stack 70. UIPC protocol stack 70 requires a routing library for determining a message route, based on application ID APP_ID, and network address N_ADDR. For routing, UIPC API 60 calls API provided by the routing library, using application ID APP_ID and network address N_ADDR, and decides to which the message received belongs, i.e., interprocess message or intraprocessor message. If it is an interprocessor message, UIPC API 60 transmits the message to a queue of UIPC protocol stack 70. Typically, the protocol stack conforms to OSI (Open System Interconnection) model, but in the present invention, it does not support all of the seven layers but three layers only. To be more specific, UIPC protocol stack 70 embodying the principles of the present invention supports a data link layer 72, a network layer 74, and a transport layer 76. Data link layer has a data link queue, and network layer 74 has a network queue, and transport layer 76 has a transport queue, respectively.

The performances of those three layers will be explained later in detail. Before getting into further details on each layer, however, it is necessary to introduce some general requirements that are applied to each layer. This is done so as an intention of implementing the above described layers.

First of all, a header for each layer should include a protocol discriminator. The discriminator manifests whether a certain protocol or a combination of protocols is accompanied with a message. Generally, the protocol discriminator comprises 2 or 3 bits in a header. This implementation will be continued without changing other protocols. For instance, a received message being processed by network layer 74 has a protocol discriminator in a network layer header that directs which protocol module should process the message next. If the UIPC intends to support transport layer protocols like TCP (Transmission Control Protocol) or UDP (User Datagram Protocol), the protocol discriminator informs the network layer 74 whether or not the message should be transported to the TCP or UDP module. At this time, the UDP refers to internet standard network layer, transport layer, and session layer protocols that provide datagram services. The UDP, similar to TCP, is a connectionless protocol on a top level layer of IP.

Some protocol layers are dependent on other layers, or they might not be used independently as well. For example, there is LAPD, a data link layer protocol dependent on a physical HDLC (High level Data Link Control) layer. Here, "LAPD" means a link access procedure on D channel.

Each layer has a message priority. Therefore, messages or segments with high priorities (segments, if a message is long enough to be segmented) are transported before other messages or segments. Preferably, two priorities, that is, "Normal" and "High", are introduced in the present invention since further division would only make things more confusing. However, if necessary, additional division could be done on the priorities at any time.

Moreover, each layer can define specific control messages that are exchanged between same layers at an endpoint. Such control messages negotiate protocol parameters with a layer or allow one layer to perform a flow control.

The following describe characteristics and responsibilities of each protocol layer. Each part has a primitive list which is given by each layer. He primitives are supposed to show an external interface (that is, a next protocol layer) to be provided to another software. They do not necessarily explain actual messages that are communicated between two endpoints. Also, no explanation will be given on the messages and definitions of their state machines because they will be defined when a more concrete design is set.

The primitives will be named in conforming to the terminology system of ITU (International Telecommunication Union), and will be classified to "Request", "Response", "Indication", and "Confirm" as follows.

Request: It means a function that a layer should support, and usually a next layer of the layer invokes it to request a certain operation.

Response: It is invoked by a distant or remote terminal when an order asking for a response is received. In consequence, a requestor of the above 'Request' would receive the confirmation.

Indication: It is a notice informing that an event took place. Usually, it indicates a next layer ascending or means that a code which is generated later receives such orders. Most of 'Indication's are the result of the distant(remote) terminal initiating a certain operation through a 'Request'.

Confirm: It is a confirmation in response of the 'Request'.

Each primitive has data having a designated primitive associated therewith. The mechanism for passing through the primitive inbetween the layers will not be explained in detail here since it is a part of the detailed design of the layers.

On the other hand, it is very important to be aware of the necessity of defining a Maximum Transmission Unit (MTU). MTU defines a maximum message size. Any message under the maximum size can be transmitted as a single message.

In fact, determining the maximum transmission unit is a part of an application design. Therefore, it is not defined as a part of the UIPC. However, the UIPC, to designate the MTU, defines a visible internal API for the UIPC components only. The MTU is determined based on the requirements for performing an application, number of a hop that a message is supposed to take (hop: it is a section between a router and a router.), and communication link rate currently being used.

There can be a lot of complex problems with networks for guiding message paths from one node to the next node. For example, if the MTU is not the same for each hope, something has to be done to solve the imbalance. The thing is that troubles are sometimes made when a node transmits a message having a large MTU, and this message is broadcasted through another node after going beyond a hop with a small MTU. Of course, it will be very difficult for a certain node to know every MTU of every link a message travels. As a matter of fact, an originating node might not even know to which links the message are transmitted. All the originating node knows is how to send the message to the next node. Therefore, the protocol stack of each node should be able to overcome the discrepancy in MTU sizes of the links that are connected to a corresponding node. Network Layer 74, although it will be described later in the part of "Network Layer 74", has a segmentation function. This should be utilized for segmenting a large MTU into smaller MTU. If network layer intends not to carry out the segmentation, an end-to-end connection can be tried as an alternative, wherein all nodes partake in a discussion for determining a MTU. Unfortunately however, this method generates overhead and is less effective for connectionless messages.

### Data Link Layer 72

Among the three layers the UIPC protocol stack 70 supports, data link layer 72 is first explained. Data link layer 72 connects a data link between endpoints, and is responsible for error-free data transmission between links, and provides the following performances.
1. It does queuing by offering data priorities.
2. It supports a smooth transceiving of data by providing a flow control.
3. It supports error-free data transmission.
4. It provides connectionless mode and connection-oriented mode, and in case of the connection oriented mode, it connects/releases data links.
5. When there is an error, it can retransmit a corresponding data.

Table 4 is a summary of connection-oriented mode primitives at the data link layer 72 that are required of connection-oriented data links at the least, and their description. Table 5 is a summary of connectionless mode primitives at the data link layer 72 that are required of connectionless data links at the least, and their description.

**[Table 4]**

| <Connection-oriented Mode Primitives at Data Link Layer 72 and Description thereof> | | |
|---|---|---|
| Service | Primitive | Description |
| Link Setting | DL-CONNECT request | It initiates a connection to a remote end or to a physical channel. |
| | DL-CONNECT indication | It is received when a remote end initiates a connection to you. |
| | DL-CONNECT response | It is invoked by DL-CONNECT indication receiver to accept the connection. |
| | DL-CONNECT confirm | It is notified to a connection starter telling that a remote end accepted the connection. |
| Normal Data Transmission | DL-DATA request | It is used by a transmitter for data transmission. |
| | DL-DATA indication | It is taken to a receiver for data receiving. |
| Link Release | DL-DISCONNECT request | Either a transmitter or a receiver can initiate the connection release. No response. |
| | DL-DIS CONNECT indication | It is received when a remote end releases the connection. |

**[Table 5]**

| <Connectionless Mode Primitives at Data Link Layer 72 and Description thereof> | | |
|---|---|---|
| Service | Primitive | Description |
| Link Setting | DL-DATA request | A transmitter uses it for data transmission. |
| | DL-DATA indication | A receiver uses it for data receiving. |

Explained below is network layer 74 among the three layers supported by UIPC protocol stack 70. Network layer 74 is in charge of message routing between processors in the interprocessor communication. The following describe the functions of Network layer 72.

### 1. It provides a message routing function.

It determines message routes, based on network address N_ADDR. More particularly, network layer determines whether a message should be sent to a transport layer as a process's message or the message should be transported through another interface to get to the final destination.

### 2. It supports segmentation and reassembly of messages.

At the time of message routing, it segments and reassembles messages in case that a message is sent to an interface having a different MTU with that of the data link layer.

### 3. It performs a stateless operation.

Because network layer 74 does not support the message retransmission function, it performs a stateless operation without state machine. Once a message is transmitted, the transmitted message is not saved and later vanishes, regardless of whether a receiver receives the message or not. If more reliable transmitting/receiving messages is required between endpoints, it is taken to transport layer 76.

UIPC 30 defines additional address relevant primitives to possess an interface capable of carrying out the performances of the above described network layer 74. Table 6 below is a summary of network layer 74 primitives and description thereof.

**[Table 6]**

| <Primitives at Network Layer 74 and Description thereof> | | |
|---|---|---|
| Service | Primitive | Description |
| Normal Data Transmission | N-DATA request | A transmitter uses it for data transmission. |
| | N-DATA indication | A receiver uses it for data receiving. |

Lastly, transport layer 76 among the three layers supported by UIPC protocol stack 70 is now explained. In general, transport layer 76 is responsible for end-to-end communication between tasks. The following explain more about the functions of transport layer 76.

### 1. It provides a message routing function.

It transports a received message to a destination application. To this end, the transport layer 76 is in charge of building a routing table based on the application ID APP_ID. The routing table can be approached through an internal API for use of UIPC API 60.

2. It provides connectionless mode and connection-oriented mode. The connectionless mode is used under the condition that underlying layers (e.g., data link layer) secure reliability between end-to-end to reduce overheads during the communication. Therefore, in the connectionless mode, as in the data link layer 72, whether a destination application received the message is not checked at all. In the connection-oriented mode, on the other hand, end-to-end applications' connection should be set up to be able to transmit/receive messages, which is similar to a socket of TCP (Transmission Control Protocol) in terms of function. In addition, since the connection-oriented mode has additional overheads and is very complicated at the time of setting/releasing the connections, it is preferable not to use this mode too often especially when an underlying layer has relatively low reliability and when there are not many requests for real-time communication.

### 3. It provides a message multiplexing function.

When a number of messages are received from many applications, the transport layer 76 combines the messages based on the network address N_ADDR of the originating place, and transport the combined messages to a corresponding application.

Table 7 is a summary of connection-oriented mode primitives at the transport layer 76 that are required for an external interface function, and description thereof. Table 5 is a summary of connectionless mode primitives at the transport layer 76 that are required for an external interface function, and description thereof.

**[Table 7]**

| <Connection-oriented Mode Primitives at Transport Layer 76 and Description thereof> | | |
|---|---|---|
| Service | Primitive | Description |
| Link Setting | T-CONNECT request | It initiates a connection to an application. Its response is associated with a queue handler. |
| | T-CONNECT indication | It is received when a remote end initiates a connection to an application. |
| | T-CONNECT response | It is invoked by T-CONNECT indication receiver to accept the connection. |
| | T-CONNECT confirm | It is notified to a connection starter telling that a remote end accepted the connection. |
| Normal Data Transmission | T-DATA request | It is used by a transmitter for data transmission. |
| | T-DATA indication | It is taken to a receiver for data receiving. |
| Link Release | T-DISCONNECT request | Either a transmitter or a receiver can initiate the connection release. No response. |
| | T-DISCONNECT indication | It is received when a remote end releases the connection. |

**[Table 8]**

| <Connectionless Mode Primitives at Transport Layer 76 and Description thereof> | | |
|---|---|---|
| Service | Primitive | Description |
| Normal Data Transmission | T-DATA request | A transmitter uses it for data transmission. |
| | T-DATA indication | A receiver uses it for data receiving. |

A general procedure for transporting message data from an originating task to a terminating task embodying the principles of the present invention is not explained below with reference to FIGs 1 through 6.

An originating task, to transport a message to a destination task, calls Uipc_SendMsg(data,destinationAddress) function, which is capable of accommodating the destination task's network address N_ADDR, application ID APP_ID, and message data, from UIPC API. After that, the task loads the destination task's network address N_ADDR, application ID APP_ID, and message data upon the Uipc_SendMsg(data,destinationAddress) function, and UIPC API 60 decides whether the destination address, that is, the network address N_ADDR is the same with the network address of its own card. If so, that is, if the destination address, or the network address, is the network address of its own card, the intraprocessor communication UIPC transports the message to the destination. But if the destination address is not identical with the network address of its own card, the interprocessor communication UIPC transports the message to the destination. If the network address N_ADDR loaded upon the Uipc_SendMsg(data,destinationAddress) function is the network address of its own card, i.e., the intraprocessor communication UIPC, the UIPC API 60 transports the message directly to a message queue of the destination task within the card through the OIA API library that is provided by the OIA layer 54 depicted in FIG. 3. In case the intraprocessor communication UIPC is concerned, the protocol stack 70 is not used at all. Meanwhile, having received the message, the destination task controls over relevant performances, such as, message receiving, message decoding, message processing, and other processes separately done by the task upon request, based on the basic common control flow of the common task architecture shown in FIG. 5 and FIG. 6, by using the Uipc_RcvLoop() function.

On the other hand, if the destination address, or the network address N_ADDR, is not the same with the network address of its own card, that is, if it is the interprocessor communication UIPC, UIPC API 60 transports the message to a message queue of UIPC protocol stack 70 for routing searching for an external destination. More specifically speaking, UIPC API 60 transports the message to a transport queue of UIPC protocol stack 70. Then, transport layer 76 conducts the transport layer's specific operation on the message sent to the transport queue, and processes the message, and sends the processed message to a network queue of network layer 74. Network layer 74 conducts the network layer's specific operation on the message sent to the network queue, and transports the message to a data link queue of data link layer 72. Similarly, data link layer 72 conducts the data link layer's specific operation on the message sent to the data link queue, and transports the message to DIA layer (please refer to 46 of FIG. 3), devices driver 48 of the destination card through the DIA layer (please refer to 46 of FIG. 3), devices driver 48.

Later, the message transmitted to the DIA layer (please refer to 46 of FIG. 3), devices driver 48 of the destination card is forwarded to the destination task through data link layer 72, network layer 74, and transport layer 76 of the protocol layer 70. Also, network address N_ADDR and application ID APP_ID can be used for finding out the destination card and the destination task. Accordingly, the destination task controls over relevant performances, such as, message receiving, message decoding, message processing, and other processes separately done by the task upon request, based on the basic common control flow of the common task architecture shown in FIG. 5 and FIG. 6, by using the Uipc_RcvLoop( ) function provided by UIPC API library.

Table 9 below illustrates a program concerning Uipc_SendMsg(data, destinationAddress) function, which is performed within a task, having been called of UIPC API 60.

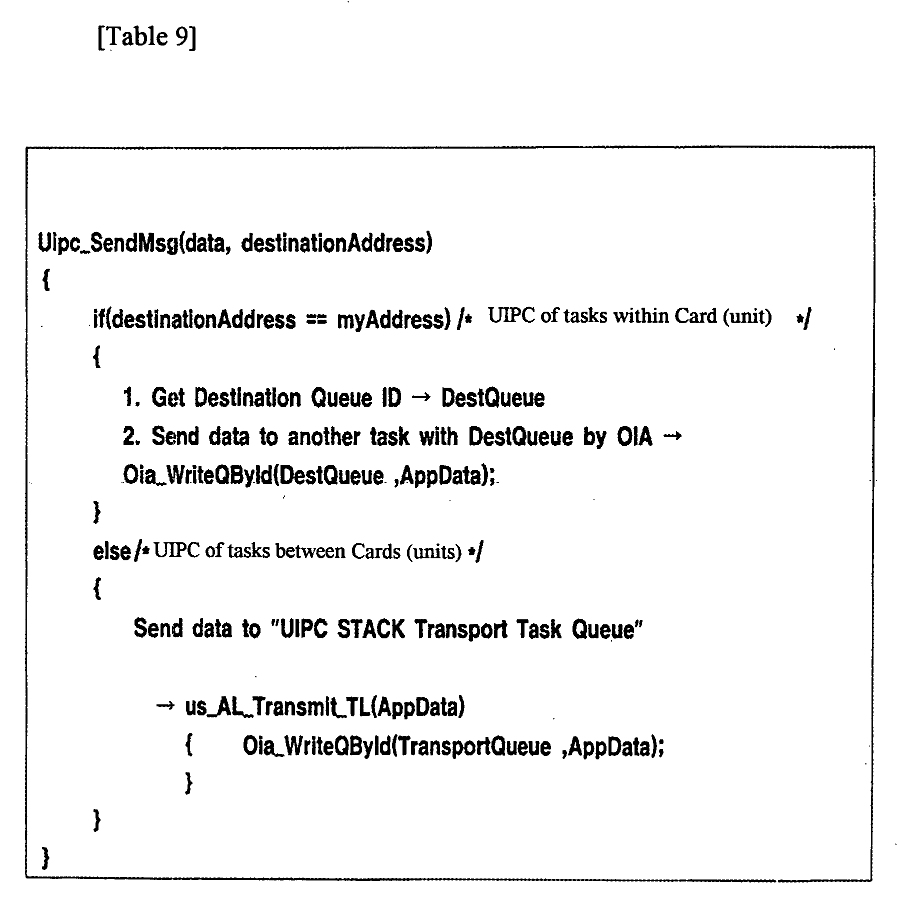

Similarly, Table 10 below illustrates a program concerning Uipc_RcvLoop( ) function, which is performed within a task, having been called of UIPC API 60.

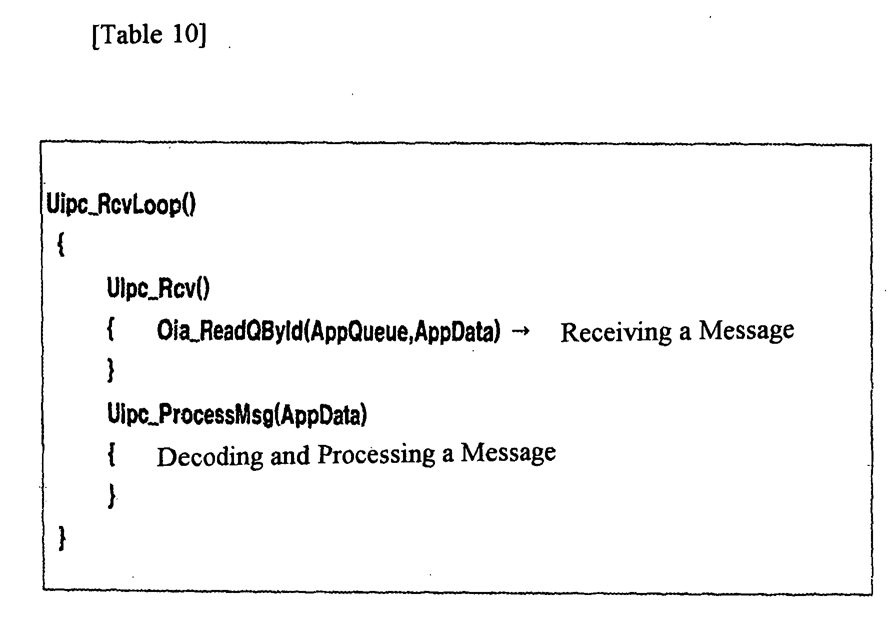

In conclusion, UIPC of the present invention made possible for all applications (processes) have a common structure through a structure called a common task architecture, and it eventually eased the burden of developing new communication systems and cut the development time itself. Moreover, thanks to a common software platform, the combination of horizontal components and vertical components, there is no need to do extra work because of coming changes in operating systems and devices.

## Claims

1. An interprocess communication method for transporting messages from an originating place to a terminating place, the method comprising:
providing an operating system-unified interface function, at an operating system independent access (OIA) layer, which is independently accessible to operating systems of a communication apparatus;
providing a device-unified interface function, at a device independent access (DIA) layer, which is independently accessible to physical devices of the communication apparatus; and
transporting messages, at a unified interprocess communication (UIPC) layer, from the originating place to the terminating place through at least one of the operating system independent access layer and the device independent access layer, using information about the terminating place that is provided by a terminating place task, and using a common task architecture based on the task's basic common control flow.

2. The method as claimed in claim 1, wherein the UIPC layer comprises:
a UIPC application program interface (API) for providing an interface, enabling the task to use UIPC function, and for determining intraprocessor communication and interprocessor communication paths based on the information about the terminating place; and
a UIPC protocol stack for routing between units for the intraprocessor communication, using messages whose traveling paths are determined by the UIPC API.

3. The method as claimed in claim 1, wherein the UIPC protocol stack comprises:
a data link layer for connecting a data link between endpoints, and for transmitting error-free data between links;
a network layer for message routing between tasks during intraprocessor communication; and
a transport layer for end-to-end communication between tasks.

4. The method as claimed in one of the claims 1 to 3, wherein the information about the terminating place comprises an application discriminator for discriminating a corresponding task to communicate with, and a network address for locating a physical address of the corresponding task.

5. The method as claimed in claim 4, wherein the network address comprises Rack-Shelf-Slot-Port information.

6. The method as claimed in claim 4, wherein the UIPC API is a common library that is applicable to any kind of task.

7. The method as claimed in one of the claims 1 to 6, wherein the basic common control flow of the common task architecture includes message receiving, message decoding, message processing, and other relevant functions a task is supposed to carry out upon request.

8. An interprocessor communication apparatus for transporting messages from an originating place to a terminating place, the apparatus comprising:
an operating system independent access (OIA) layer for providing an operating system-unified interface function, which is independently accessible to operating systems of a communication apparatus;
a device independent access (DIA) layer for providing a device-unified interface function, which is independently accessible to physical devices of the communication apparatus; and
a unified interprocess communication (UIPC) layer for transporting messages from the originating place to the terminating place through at least one of the operating system independent access layer and the device independent access layer, using information about the terminating place that is provided by a terminating place task, and using a common task architecture based on the task's basic common control flow.

9. The apparatus as claimed in claim 8, wherein the unified interprocess communication (UIPC) layer comprises:
a UIPC application program interface (API) for providing an interface, enabling the task to use UIPC function, and for determining intraprocessor communication and interprocessor communication paths based on the information about the terminating place; and
a UIPC protocol stack for routing between units for the intraprocessor communication, using messages whose traveling paths are determined by the UIPC API.

10. The apparatus as claimed in claim 8, wherein the UIPC protocol stack comprises:
a data link layer for connecting a data link between endpoints, and for transmitting error-free data between links;
a network layer for message routing between tasks during intraprocessor communication; and
a transport layer for end-to-end communication between tasks.

11. The apparatus as claimed in one of the claims 8 to 10, wherein the information about the terminating place comprises an application discriminator for discriminating a corresponding task to communicate with, and a network address for locating a physical address of the corresponding task.

12. The apparatus as claimed in claim 11, wherein the network address comprises Rack-Shelf-Slot-Port information.

13. The apparatus as claimed in claim 9, wherein the UIPC API is a common library that is applicable to any kind of task.

14. The apparatus as claimed in one of the claims 8 to 13, wherein the basic common control flow of the common task architecture includes message receiving, message decoding, message processing, and other relevant functions a task is supposed to carry out upon request.

15. An interprocessor communication method for transporting messages from an originating place to a terminating place, the method comprising:
providing a common task architecture having a basic common control flow of a task as an interface for unified interprocess communication (UIPC);
if an originating task provides a message and information about the terminating place using the common task architecture, deciding, based on the information about the terminating place, whether the message is of interprocessor communication messages within a card or of intraprocessor communication messages between cards;
if the message belongs to the intraprocessor communication messages between cards, transporting the message to a queue of UIPC protocol stack for routing; and
if the message belongs to the interprocessor communication messages within a card, transporting the message to a message queue of a corresponding task in the card through application program interface (API) library that is provided by operating system independent access (OIA) layer.

16. The method as claimed in claim 15, wherein the UIPC protocol stack comprises:
a data link layer for connecting a data link between endpoints, and for transmitting error-free data between links;
a network layer for message routing between tasks during intraprocessor communication; and
a transport layer for end-to-end communication between tasks.

17. An interprocessor communication apparatus for transporting messages from an originating place to a terminating place, the apparatus comprising:
an operating system block for independently processing internal communication in the apparatus; and
a hardware block for independently processing external communication to or from the apparatus.
